# EUROPEAN PATENT SPECIFICATION

(11) **EP 3 762 663 B1**
(45) Date of publication and mention of the grant of the patent: **24.11.2021**
(21) Application number: 20720957.8
(22) Date of filing: 25.03.2020
(51) Int. Cl.: F24T 10/10

(54) **GEOTHERMAL HEAT EXCHANGER FOR RECOVERING GEOTHERMAL ENERGY FROM DRY ROCKS BY MEANS OF A HEAT TRANSFER MEDIUM WITH A CLOSED CIRCUIT OF THE HEAT TRANSFER MEDIUM**
GEOTHERMISCHER WÄRMETAUSCHER ZUR RÜCKGEWINNUNG VON GEOTHERMISCHER ENERGIE AUS TROCKENEN STEINEN MITTELS EINES WÄRMETRANSFERMEDIUMS MIT EINEM GESCHLOSSENEN KREISLAUF DES WÄRMETRANSFERMEDIUMS
ÉCHANGEUR DE CHALEUR GÉOTHERMIQUE POUR LA RÉCUPÉRATION D'ÉNERGIE GÉOTHERMIQUE À PARTIR DE ROCHES SÈCHES AU MOYEN D'UN MILIEU DE TRANSFERT DE CHALEUR AVEC UN CIRCUIT FERMÉ DU MILIEU DE TRANSFERT DE CHALEUR

(30) Priority: 26.03.2019 SK 500242019 U
(43) Date of publication of application: 13.01.2021
(73) Proprietor: GA Drilling, a. s., 917 01 Trnava (SK)
(72) Inventor: LONGAUER, Jaroslav, 831 02 Bratislava (SK); KOCIS, Ivan, 841 04 Bratislava (SK); KRISTOFIC, Tomas, 841 07 Bratislava (SK)
(74) Representative: Majlingová, Zuzana
(86) International application number: PCT/SK2020/050004
(87) International publication number: WO 2020/197511

(56) References cited:
- WO-A1-2015/134974
- US-A1- 2016 245 550
- US-B1- 6 247 313

## Description

### Technical field

The invention relates to a geothermal heat exchanger for recovering geothermal energy, in particular focused on energy recovered from dry rocks of deep holes.

### Background art

As one of the few energy sectors recovering heat and generating electrical energy from geothermal thermal energy is not burdened by generating greenhouse gases and emissions during production. It is thanks to this feature that heat from a geothermal heat exchanger represents a significant and attractive alternative to conventional production of thermal as well as electrical energy from fossil fuels. It is characterised by one of the lowest carbon emission traces; its availability, however, is limited by natural conditions and high technological demands on equipment needed for recovering geothermal heat. Steady and uninterrupted production of heat in the mantle and core is an advantage of geothermal energy. The fact enables to cover essential energy needs, be it virtually anywhere, since heat is continually available in a certain depth and it is independent of variations on the earth surface (mainly due to hydro-meteorological effects).

The amount of utilizable heat obtained from rocks is limited by a produced heat output and its temperature level. The amount of heat obtained is significantly influenced by the following:
- Thermal conductivity of the rocks themselves. The represented rocks have significantly different heat-conducting characteristics. It results in different output of the heat exchanger at an identical heat gradient.
- Vertical temperature gradient that is given by the difference of temperatures between two positions placed at different depths vertically one above another.

The term Dry rocks defines the rock itself in a geological bedrock below the earth surface. As the depth increases, the temperature of the rocks increases, as well.

The heat of dry rocks is a term in the technical field limited to recovery of thermal energy from hot dry rocks, known in English under the name Hot Dry Rock (HDR), the technical field, engineering geothermal systems (EGS) are applied in.

A geothermal heat exchanger is a device for extracting heat from rocks.

A geothermal heat exchanger is a device for recovering heat from rocks.

An ultra-deep geothermal heat exchanger - formed by a set of pipelines created in the hot dry rock reaching the depths of 5 to 10 km, in future even 15 to 20 km for obtaining energy under supercritical conditions. It is characterized by branching of pipelines and it consists of functional parts divided according to their principal features as follows: an inlet section of the heat exchanger, a heat exchange production section of the heat exchanger and an outlet section of the heat exchanger. Obtained heat is transmitted in an above-ground heat exchanger station.

The above-ground heat exchanger station - a place of the transmission of thermal energy from a heat transfer medium to the heat consumption distribution networks. The above-ground part consists of the transmission or heat exchanger station and heat appliances.

The inlet section of the heat exchanger is the part of the heat exchanger formed by a pipeline serving to distribute and supply the heat transfer medium from the surface to a deep heat production section.

The heat exchanger production section of the heat exchanger is the part where the most intense transfer of heat occurs with respect to the highest temperature difference between the heat transfer medium and the rock.

The outlet section of the heat exchanger is the part of the exchanger serving primarily for transport, minorily for transmission and gain of heat. It consists of a pipeline formed in the natural rock as well as of an inserted reinforcement in prevailingly sedimentary layers of the rock.

Splitters and collectors - they consist of the pipelines that divide and connect branches of the pipelines as necessary into a closed circuit.

Heat transfer medium - a fluid used for heat transfer.

Pipeline wall - preferably formed in-situ from the rocks having smooth and tight surface. A part of the pipeline is in the form of a duct in the parts of a rock massif, where loose sedimentary rocks occur.

Heat transfer collecting area - a part of the heat exchanger production section of the heat exchanger formed by a flat bundle of the pipelines.

A method of obtaining geothermal energy can be divided into three essential groups:
- Hydrogeothermal systems. A hydrogeothermal method of obtaining energy is subject to existence of a suitable water reservoir, so called aquifer, in geological formations.
- Open systems - Hydraulically stimulated geothermal systems (Enhanced Geothermal Systems (EGS)). In case of EGS, advantages of the specific properties of bedrock of a rock complex, in particular its permeability, are used. If there is no permeability, it has to be stimulated by additional engineering procedures. Since the water reservoirs do not naturally occur in the systems, they have to be created. That requires high amounts of water having volumes of several km³, which greatly reduces applicability of the technology, in particular in areas with scarce water.
- Closed systems - Engineered Geothermal Systems (EGS). The exchangers having a closed circuit are known mainly from the areas of the so-called "shallow geothermics". In existing implementations, they utilize a heat transfer medium circulating in the exchanger having a closed and tight circuit designed directly in a borehole. Rocks at greater depths allow higher temperatures to be reached, the concept of the designed exchanger from the shallow geothermics, however, does not allow it due to its design/dimensions. Forming the exchanger at greater depths requires an engineering solution and new technological procedures.

The heat transfer medium in the closed geothermal system has consumption lower by order than open exchangers. Due to the necessary tightness and installation of the comprehensive functioning exchanger, the exchanger suffers from technical and depth limitations. The heat transfer medium having a higher outlet temperature can be utilized in a number of thermal processes, transformable to higher energy forms. That brings greater possibilities for application.

A majority of published patents and patent applications dealing with issues of the heat exchange from geothermal boreholes is derived from the field of knowledge originating from the concept of the shallow geothermics heat exchangers.

First patent concepts extrapolated the concept of the shallow geothermics into depths, took over the main features, others addressed geometry in order to increase heat exchange areas and to form the exchanger in a rock by conventional drilling technologies.

In patent application US 20160245550 A1 O. K. Sønju et al. describe a geothermal power plant having coaxial conduction of inlet and outlet pipes. The production branches are led mainly in the horizontal direction. The patent also includes a process of forming individual branches of a geothermal heat exchanger, where the heat exchanger is fully functional even with further expansion of the heat exchanger branches. The disadvantage of the coaxial design in the simultaneous cooling down of the exiting heated medium is a major drawback of this geometry and it occurs in several patents and patent applications in the area of the geothermal energy utilization.

Patent document US 6,247,313B1 (WO 98/22760) of the inventors P. H. Moe, K. M. Rabben, discloses a device utilizing geothermal energy and a plurality of geometric executions. There is a separate inlet part and it is branched either horizontally or vertically at a depth of at least 1,000 m. An ascending part makes a sharp angle with the branches. Said geometry has higher demands for the pumps (which reduces effectiveness of the energy utilization in the system). Sharp angles in the geometry are one of the reasons, they result in significant hydraulic losses due to the increased hydraulic resistance. The diameter of the inlet and outlet pipes is identical.

There is a U-shaped geothermal system in patent application US 2007245729 A1 of D. L. Mickleson. An inlet of a medium may be as far as 5 km away from an outlet, which is technically difficult to make in deep boreholes. At the same time, such system has high requirements of pumps performance in order to overcome hydraulic losses, which ultimately reduces effectiveness of geothermal energy recovery.

Open systems are another important group of geothermal exchangers, they are described, for example, in patent document US 6,668,554 B1.A higher consumption of the working medium is needed in such systems, as the walls of the heat exchanger are not tight. If water is used as a medium, the exploitation of the systems is highly dependent on availability of water resources. D. W. Brown also describes the use of CO₂ as the working medium, instead of water. That presents certain advantages in terms of the solubility of mineral substances in the medium (CO2 in comparison to water). On the other hand, the presence of CO₂ as the working medium significantly affects the pressure dependence of the physical properties of the medium and the phase changes at higher pressures.

A geometric arrangement is an important feature for virtually all methods of obtaining heat by geothermal methods. Coaxial geothermal heat exchangers are characterized by the geometry, where an inlet of a medium is surrounded by ascending medium and vice versa. Patent document US8708046 B2 of C. Montgomery et al. discloses the medium inlet in the centre and the outlet at the margins. The opposite case: an inlet at the margins and an outlet in the centre is presented in the patent document EP0830550 of J. H. Shnell. In both cases the designs of the geothermal heat exchanger is simpler, due to said geometry. Due to the coaxial geometry, the energy recovery effectiveness is lower, as well, since significant cooling of the hot exiting medium by means of the entering cold medium occurs.

The method of obtaining geothermal energy alone can take place by two essential principles
▪Transmission of energy using chemical reactions
▪By physical manner by means of heat transfer medium.

Utilizing the geothermal energy for the endothermic reaction after medium transport on the surface the energy is released by means of the exothermic reaction is a main principle of obtaining energy in the patent of J. H. Shnell. In case of the endothermic reaction a catalytic decomposition of ethanol to hydrogen and ethylene oxide is considered. An exothermic reaction is a reverse reaction to produce ethanol. Complexity in separation is a drawback of such approach. A presence of a catalyst (palladium or copper) inside a borehole is inevitable. In addition to costliness, the use of such materials represents a significant environmental risk.

Obtaining energy by means of a heat transfer medium is a more common method. The principle explained in patent document EP1995457B1 of N. Kudrin, consists in injecting a cold medium on a surface, followed by heating it in the pipelines of a geothermal heat exchanger and transmission of thermal energy. The cooled medium can be reused. The description in more details is comprised in patent application US 4,357,802 A of E. F. Wahl III. and F. B. Boucher. There is a variety of heat transfer medium disclosed in the invention, such as hydrocarbons and CO₂. Changes of the state of matter and related changes of the physical properties - in particular density, play also an important part in the entire process. In case of certain heat transfer media, such as halogen derivatives of hydrocarbons, their applicability is questionable due to their toxicity and environmental impact. In the case the gaseous media are used, they have to be dissolved in a heat transfer transport medium. Otherwise, it would result in increased costs of medium transport.

CN 103362442 A also discloses a closed system of a geothermal (GT) heat exchanger in addition to an open one. It focuses on connecting two boreholes by means of an auxiliary borehole in order to provide for equilibrium of a flow of a heat transfer medium in heat exchange branches. The inventors only addressed hydraulic losses and did not deal with other effects on the overall pressure conditions in the heat exchanger.

WO 2015/134974 A1 discloses a process for producing power including injecting a first heat transfer fluid through an injection well to a geothermally-heated formation that contains a second heat transfer fluid. The first heat transfer fluid may then be heated via indirect heat exchange in an interwell run fluidly connected to the injection well and disposed within the geothermally-heated formation. The heated first heat transfer fluid may then be recovered through a production well fluidly connected to the interwell run. Thermal energy contained in the recovered heated first heat transfer fluid may then be converted in a power production unit fluidly connected to the injection well and the production well. The interwell run, in some embodiments, may include multiple heat exchange tubes disposed within a perforated casing or drill pipe.

### Summary of the invention

The mentioned drawbacks of the heat exchangers mentioned in the previous part are reduced to a large extend by a geothermal heat exchanger for recovering geothermal energy from dry rocks by means of a closed-circuit heat transfer medium having a high temperature above 130 °C, preferably above 190 °C and even more preferably above 250 °C, or higher at the outlet onto the earth surface. The heat exchanger comprises a back-pressure closure, a heat transfer medium, a pipeline made by a drilling technology in a rock mass. The pipeline comprises at least one descending inlet section, a heat exchange production section and at least one outlet section. The heat exchanger may comprise a pump for pumping the heat transfer medium into the pipeline. The pipeline of the geothermal heat exchanger consists of at least one descending inlet section of the pipeline for carrying the heat transfer medium to a depth of 2.5 to 20 km. The heat exchange production section of the pipeline is connected to the descending inlet section and the outlet section of the pipeline is connected to the heat exchange production section. The subject-matter of the geothermal heat exchanger according to the present invention is that the pipeline of the heat exchange production section is formed in ascending manner in a direction from point A towards the outlet section of the heat exchanger, where the gradient angle is 1° to 20° from the horizontal direction, wherein the heat exchange production section comprises at least two pipeline branches and where the descending inlet section of the pipeline is shorter than a sum of the lengths of the ascending pipeline of the heat exchange production section and of the ascending outlet section in terms of flow of the heat transfer medium; wherein the lowest point of the geothermal heat exchanger is marked as point A; it further comprises a splitter positioned before the lowest point A, to form branches of the heat exchange production section and a collector for connecting the branches of the pipeline of the heat exchange production section at the passage to the outlet section, and where flow velocity of the heat transfer medium in the outlet section is higher than the flow velocity of the heat transfer medium in the heat exchange production section, wherein the flow velocity of the heat transfer medium in the inlet section and heat exchange production section of the heat exchanger is lower than 0.8 m/s in order to provide for the lowest possible hydraulic losses.

According to the preferred embodiment the flow velocity of the heat transfer medium in the heat exchange production section is 0.1 to 0.3 m/s.

According to another preferred embodiment a diameter of the pipeline of the outlet section is smaller than the pipeline of the inlet section of the heat exchanger.

The subject-matter of the present invention is also the geothermal heat exchanger for obtaining geothermal energy from dry rocks by means of the heat transfer medium having the closed circuit for obtaining high heat output at low outlet temperature of 60 to 130 °C comprising a back pressure closure, a heat transfer medium, a pipeline formed by a drilling technology in the rock mass, further it may comprise a pump for pumping the heat transfer medium into the pipeline, the pipeline of the geothermal heat exchanger consists of at least one descending inlet section of the pipeline to supply the heat transfer medium into the depth of 2.5 to 20 km, the heat exchange production section be connected to the descending inlet section and the outlet section of the pipeline be connected to the heat exchange production section. The subject-matter of the geothermal heat exchanger of this type is that the inlet section of the pipeline descending at an angle of 3 to 8° from the vertical direction is shorter than a sum of lengths of the ascending pipeline of the heat exchange production section and the ascending outlet section of the pipeline of the geothermal heat exchanger in terms of flow of the heat transfer medium; and where the lowest point of the geothermal heat exchanger is marked as point A. The pipeline of the heat exchange production section is formed in ascending manner in the direction from point A to the outlet section of the heat exchanger, where the gradient angle is 1° to 20° from the horizontal direction, wherein the heat exchange production section consists of at least two branches of the pipeline, a splitter, positioned after the lowest point A, for forming branches of the heat exchange production section, where a diameter of the pipeline of the branches of the heat exchange production section is identical as the diameter of the pipeline of the inlet section. The flow velocity of the heat transfer medium in the heat exchange production section is at least 1.3 m/s at the flow rate of 33 l/s. It further comprises a collector for connecting the branches of the pipeline on the passage into the outlet section, whereas the flow velocity of the heat transfer medium in the vertical outlet section of the heat exchanger is 2 to 5 m/s, preferably 2.4 to 3.2 m/s.

According to a preferred embodiment of the geothermal heat exchanger of this type the heat exchange production branches of the pipeline are of the diameter of 4 to 9" and of the identical length.

According to another preferred embodiment of the geothermal heat exchanger of this type the flow velocity of the heat transfer medium in the heat exchange production section is greater than 0.5 m/s.

In both types of geothermal heat exchangers, the pipeline of the inlet section is formed in a predominantly slanted vertical direction and is connected to the pipeline of the heat exchange production section with a minimum bending radius allowed by the drilling technology. According to a preferred embodiment, the upper part of the pipeline of the inlet and/or outlet section near the surface may be reinforced by a drill casing. According to a preferred embodiment, the pipeline of the heat exchange production section after point A may ascend slantedly at an angle of 3° to 15° from the horizontal direction. The heat exchange production section may comprise 2 to 6 branches joining in the collector, wherein the mutual distance of the middle parts of the branches of the pipeline of the heat exchange production section is 550 to 750 m. According to a preferred embodiment, water may be the heat transfer medium.

The subject-matter of the present invention is also a geothermal heat exchanger suitable for maximizing the obtained temperature of a heat transfer medium, as well as for maximizing the amount of heat obtained, the essence of which is it comprises the heat transfer medium and a pipeline made by a drilling technology, where the pipeline comprises three inlet sections directed slantedly downwards at an angle of 10 ° to 25 ° from the vertical direction and which inlets form the apexes of an equilateral triangle on the surface, and a separate heat exchange production section consisting of two to three branches directing upwards at an angle of 1 to 20 ° from the horizontal plane to a vertical axis passing through the centre of the equilateral triangle, is connected to each inlet section, wherein each heat exchange production section has a separate outlet which leads into an outlet section of the geothermal heat exchanger extending upwards in the direction of the vertical axis passing through the centre of the equilateral triangle, wherein the inlet and outlet sections are defined in terms of flow of the heat transfer medium.

According to a preferred embodiment the geothermal heat exchanger may comprise three inlet sections and one outlet section, wherein, in terms of the flow direction of the heat transfer medium each inlet section is individually divided after point A by a splitter into three branches of the heat exchange production section and wherein two outer branches are arranged symmetrically around the inner branch in the plane ascending toward the axis of the outlet section at an angle of 10 to 20° from the horizontal plane and all three branches of the same heat exchange production section are connected by a collector, wherein the central perimeter of the heat exchanger is 635 m and individual adjacent pipelines of the same heat exchange production section may be at said distance from the axis of the outlet section, in each of three heat exchange production section, equally spaced from each other by 333 m; and the distance of outer branches of two adjacent heat exchange production sections may by 627 m and wherein the mutual maximum distance of the outer branches of the identical heat exchange production section is 860 m at the distance from the centre of the geothermal heat exchanger of 943 m and the mutual maximum distance of the outer branches of two adjacent heat exchange production sections may be 1021 m and the diameter of the heat exchanger from the axis of the outer section toward each splitter in the horizontal plane may be 1320 m.

According to a preferred embodiment all branches of each heat exchange production section have identical diameter.

The heat flow from the rock to the heat transfer medium is defined by thermal properties of rocks and by a thermal gradient. From the aspect of the thermal state the heat obtained from rocks consists of an accumulation and dynamic heat components.
- The accumulation heat component represents heat stored in the rock. It is primarily extracted from the rock in the initial phase of the heat exchanger operation, i.e. at the start time of the heat exchanger (in the order of months).
- The dynamic component of the heat represents heat supplied to the heat exchanger from the earth core. The proportion of the dynamic component to the accumulation component increases in time, until it becomes stable.

In terms of time and the operation of the heat exchanger itself, an initial phase and a stable phase are distinguished. The initial phase ends with stabilization of the thermal gradient in a rock. The stable phase is essential for the operation and service life of the heat exchanger. After the initial phase, the accumulation component decreases significantly with time to a level of the order of ones of percent. Then the heat passing through the boundaryless rock mass is represented predominantly by the supplied heat flow from the more remote parts of the rock mass of a geological formation.

Geometry of the heat exchanger (distances of the pipelines in the heat exchange production section) is designed for the heat exchanger operation in the stable phase. Temperature grows with a growing distance from the heat exchanger pipeline, in a certain particular distance it always reaches the temperature of an unaffected rock. Its value determines a minimum unaffected distance between the pipelines in terms of thermal impact when designing the individual branches of the heat exchanger. Thermal conductivity of a rock and the geometric dimensions of the pipeline affect the amount of heat flow into the pipeline heat exchanger. Since the structures of the pipeline in the rock are radial (circular), the heat flow density as well as the thermal gradient rise with a decreasing distance from the pipeline. The thermal conductivity of the rock is a limiting parameter of both values. It is the thermal conductivity in the rock, not the conductivity in the heat transfer medium that is the limiting parameter of the heat flow, i.e. of the heat exchanger output, unlike in the heat exchangers in conventional heat processes.

The circulating heat transfer medium, which is part of the heat exchanger, provides heat transfer in the pipelines of the geothermal exchanger.

Temperature is the essential qualitative parameter of utilization of geothermal heat from the heat exchanger. The higher the temperature of the heat transfer medium at the outlet is, the higher is the utilization of heat in several technologies. The requirements of the output transmitted by the heat transfer medium also decrease with the rising temperature. Conversely, the lower the temperature of the heat transfer medium is, the lower is its technological utilization. The efficiency of electric energy production decreases significantly with decreasing temperature.

A design of a suitable geometry and flow of the heat exchanger for obtaining the heat transfer medium having high temperature, i.e. the temperature over 130 °C, preferably 170 °C on the surface is the basis of the efficient recovery of heat by means of the geothermal heat exchanger. That enables wider utilisation of thermal energy in multiple successive applications.

In the future, a suitable design of geometry will enable to recover far more energy into the heat transfer medium at depths up to 20 km, as long as the heat exchanger is situated in supercritical conditions.

Maximization of the temperature obtained and the maximization of the amount of heat are mutually contradictory requirements. They demand different approaches when designing geometric parameters of the heat exchanger.
- When high temperature is necessary to be obtained, a low flow velocity and a long-time delay of the heat transfer medium in the heat exchange production section of the heat exchanger and followingly the highest possible velocity in the output section of the heat exchanger is essential.
- When maximising the amount of heat, the recovered heat transferred to the surface a high flow velocity and a great flow rate of the heat transfer medium in the heat exchange production and outlet section of the heat exchanger are necessary. The chosen concept of the heat exchanger depends on applications and requirements, the recovered heat (or the obtained temperature) is intended for. It is not suitable to combine both operation modes in one design of the heat exchanger. A suitable design and geometry of the geothermal heat exchanger is important for minimization of pressure and hydraulic losses and simultaneous increase of the outlet temperature.

Separate and tight pipelines in prevailingly vertical direction in the inlet and outlet sections are the main feature of the heat exchanger. Suitable fluid flow velocities and simultaneously acceptable hydraulic losses for transport of the heat transfer medium are achieved at velocities of less than 0.8 m/s. The heat production section is horizontally ascending, having the rising angle to 20°, preferably to 5°. In terms of hydraulic losses purely horizontal geometry is disadvantageous.

A pressurised circuit of the heat exchanger has to comprise safety technical components. An entrance of the inlet section of the heat exchanger is provided with a safety back-pressure closure and a pipeline.

The medium is transported by the pipeline, preferably by direct manner, toward the hot heat production layer of rocks. In the inlet section of the heat exchanger the pipeline passes through the upper sedimentary layers of rocks, where due to a low strength and tightness the pipeline of the heat transfer medium is reinforced and sealed by casing transferring pressure, when pressurising the medium, into deeper areas and preventing leakage of the heat transfer medium. Casing and sealing in a depth over 1-2 km is technically and economically unbearable.

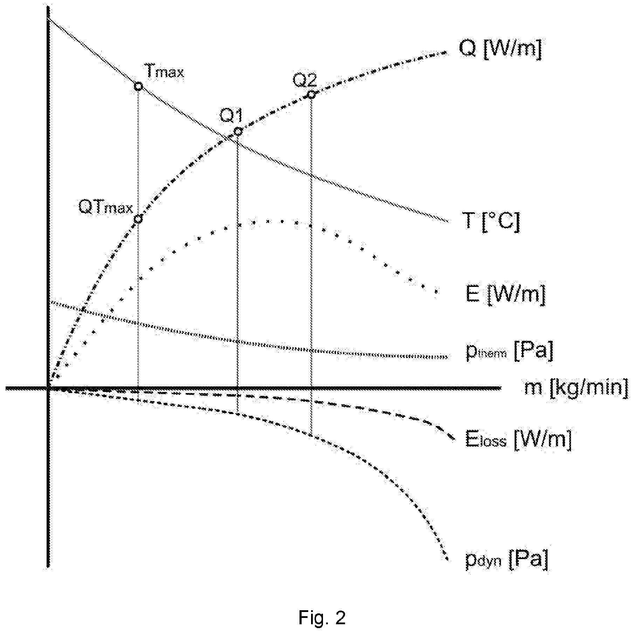

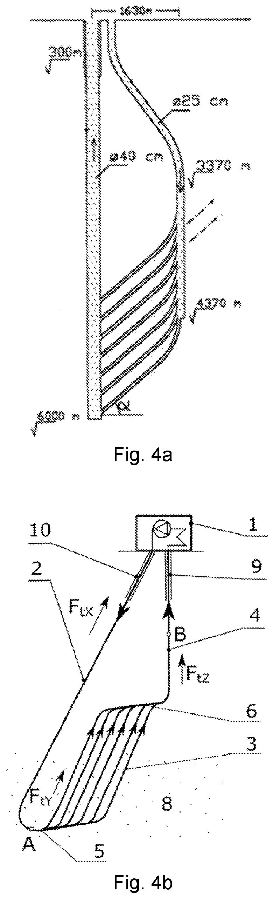

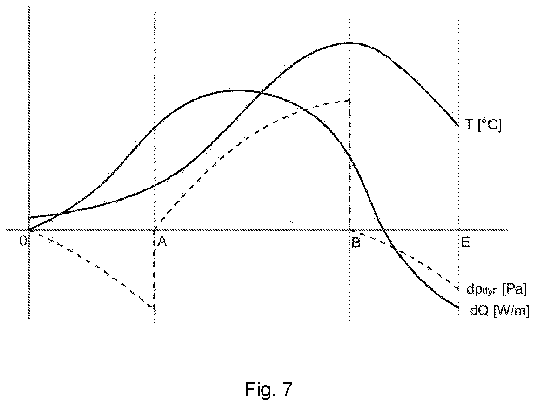

The pressure losses and thermal buoyancy force are the basic characteristics of the inlet section of the heat exchanger in comparison to other part of the heat exchanger. The thermal buoyancy force rises with the rising temperature, however only in the inlet section it counteracts against the fluid flow direction F_{tZ}+F_{tY}>F_{tX} (Fig. 4b), which manifests in an overall decrease of pressure loses (pₜₕₑᵣₘ in Fig.2). Therefore, it is important to reach optimal fluid flow velocity at minimization of the hydraulic losses (dashed line in Fig. 7, dp_{dyn}).

Minimization of hydraulic losses of the heat exchanger as a whole is achieved by the inlet sections of the pipeline of the heat exchanger being descending and in their lengths they represent a shorter part in comparison to the sum of the heat production and outlet sections of the heat exchanger that are ascending. A geometry design comprises shorter/longer branches, with the aim to reduce hydraulic losses. In terms of the heat transfer medium the essential feature of the heat exchanger is that with increasing depth the heat transfer medium comes into contact with surrounding rocks and their increasing temperature, being heated by them (see Fig. 7). Pressure requirements during circulation of the heat transfer medium decrease by decreasing density in a smaller depth interval. The density does not decrease with increasing pressure and temperature, but the enthalpy of the medium increases. That causes thermal buoyancy force that positively demonstrates in the ascending parts of the heat exchanger, negatively in the decreasing parts (Fig. 4b). The greatest effect of the thermal buoyancy forces is in the part having the greatest accession of heat, and that is in the ascending heat production section of the heat exchanger.

It is advantageous to provide for the greatest possible heat transfer area in the heat production section of the heat exchanger. Simultaneous increase of the area and decrease of the flow rate contributes to the reduction of the hydraulic pressure losses expended on the heat transfer medium circulation. Temperature of the heat transfer medium increases with the decrease in flow rate of the heat transfer medium with respect to the length of the pipeline and the outlet temperature increases, as well.

Dimensioning the branching with a splitter and a collector is an important means of a flow regulation in the heat production section of the heat exchanger. The branching is conditioned by the following:
- Expanding the collection area in order to collect heat,
- Obtaining thermal hydraulic force effect,
- Minimization of hydraulic requirements of a circuit,
- Accelerating the flow rate in the part, where heat losses occur with the aim to minimize cooling of the heat transfer medium and in order to reach the highest possible outlet temperature from the circuit.

It is necessary to provide for identical flow at identical diameters of the pipelines for even and full-valued use of the branches and for maximization of the heat transfer from the rock into the heat transfer medium. When that is not the case, some branches transfer up to several times less heat resulting in unsteadiness and reduction in heat output of the entire system of the heat production section. The identical flow rate can be provided by identical length proportions, i.e. when the branches are equidistant or by regulation, i.e. by making the flow rate between them steady, for example, by choking. Execution of the choking, however, is demanding in remote and inaccessible structure. In the case it is made without regulation, individual branches have unsteady output, different temperatures of the heat transfer medium and lower output temperature.

The positive effect of the thermal buoyancy on the heat transfer medium occurs in the parts of the heat exchanger. Temperature of the heat transfer medium increases and its density decreases with the decreasing depth. Conversely, in the part of the heat exchanger, where the depth increases and the temperature of the heat transfer medium increases the thermal buoyancy acts against the direction of the medium flow. That part is shorter at the overall positive effect of the thermal buoyancy than the part, where the thermal buoyancy acts in the direction of the medium flow.

The primary function of the outlet section is to minimise the heat losses and temperature decrease of the heat transfer medium, which are reached by the following measures:
- Accelerating the flow, be it by amendment of the pipeline by narrowing the section,
- Scaling down the heat transfer area in the outlet section of the heat exchanger, thus reducing the return heat flow from the warmer heat transfer medium to the colder rock,
- Connecting multiple flows in order to scale down the specific heat exchange area by means of increasing velocity.

The temperature of the heat transfer medium exceeds the wall temperature in point B, which is positioned in the outlet section of the heat exchanger. The direction of the heat flow changes and the heat transfer medium begins to cool down. The outlet section is divided by point B into two different parts. Heat is still obtained in the outlet section before point B, wherein it is advantageous to reduce heat losses with the increasing temperature difference after point B and according to the economic advantage to seal that part of the heat exchanger from the depth of maximum 1 km from the surface to the heat exchanger station. Elimination of the temperature decrease of the heat transfer medium occurs by increasing the flow velocity, by shortening the delay time of the heat transfer medium and by scaling down the heat exchange area of the pipeline in the end part of the outlet section after point B. The upper part of the outlet section is in the loose part near the surface reinforced by the casing, since it is often running through a layer of sedimentary and incompact rocks.

Pipeline walls that provide sealing of cracks and leaks as well as reduction of the wall surface roughness are the basic feature of the tight geothermal heat exchanger formed directly by execution of the pipelines in the rock. The walls having smooth and tight surface minimize hydraulic losses in the pipeline of the heat exchanger during circulation and recirculation of the heat transfer medium. The pipeline walls in the compact parts consist of thermally treated and compressed rocks into a tight vitrified surface structure.

The flow rates of the medium flowing through individual parts are advantageously configured by either the diameter or by the number of the pipelines so that they pursue the following characteristics/features:
- It is advantageous in the inlet section that velocity is optimal/average with respect to the heat gain and pressure losses, as the hydraulic losses increase with the building up velocity of the heat transfer medium in the circuit of the geothermal heat exchanger.
- It is advantageous in the heat production section that the flow rate of the medium is as slow as possible in order to maximise the heat transfer into the heat transfer medium in order to increase the medium temperature in the hottest areas of dry rocks and to exert the force effect of the thermal buoyancy.
- It is advantageous in the outlet section, in particular in the part where the temperature of the medium is higher than the temperature of the surrounding rocks that the medium velocity is as high as possible. The time delay in the area is thereby minimized, the fluid cooling is minimized. However, simultaneously the velocity may not exceed the limiting level, thereby we avoid a significant increase in the pressure loss that has to be compensated by means of a pump.

The mentioned two types of the heat exchangers differ not only in the flow velocity of the heat transfer medium but also in the geometry:
- The overall length of the pipeline (at an identical output but a lower outlet temperature is the overall length of the pipeline shorter than in the case with a higher required temperature of the medium at the outlet).
- In case of a requirement of a higher heat output a greater diameter of the pipeline of the outlet section with respect to the inlet section of the pipeline of the geothermal heat exchanger is required than for obtaining the heat transfer medium having a high temperature (over 130 °C) at the outlet.

In the heat production section, the pipeline covers an area reaching to the diameter of 550 m, where there is a minimum mutual interaction due to the temperature decrease in the remote parts. If it exceeds 750 m there is no interaction, however, forming great lengths of the pipeline is required in order to overcome the transport distance, which is not beneficial for the economic reasons as the pipelines are unnecessary lengthened.

### Brief description on the drawings

Fig.1 A configuration design of a geothermal heat exchanger having reinforced subsurface part in an inlet as well as outlet section of the heat exchanger. A pipeline in a heat production section is branched in a splitter and individual branches are connected into one pipeline in a collector.
Fig. 2 Value diagrams of the geothermal heat exchanger configuration as a function of the mass flow of the heat transfer medium. Q-heat output, T-outlet temperature, E total energy obtained, Eₗₒₛₛ- energy loss, ptherm- thermal power, pdyn- gas pressure loss in the system Points Q and T correspond to the individual heat exchanger configurations. Q_{Tmax} and Tₘₐₓ to Example 2, Q1 to Example 1 and Q2 to Example 3.
Fig 3. Optimal distances of the branches in a plan view with respect to the lifetime-heat recovery from a rock and mutual interaction of adjacent branches.
Figs.4a and 4c show geothermal heat exchangers according to WO 98/22760 and
Fig. 4b shows geometry of the geothermal heat exchanger according to the present invention.
Fig. 5 The basic concept of the GT exchanger, where a heat exchanger axis passes through a central part of a heat production line. The heat production pipeline rises gradiently at an angle of less than 5°.
Fig. 6 A top view of a basic spatial configuration of the geothermal heat exchanger.
Fig. 7 Temperature diagram (T), pressure change (dp), heat increase (dQ) depending on a position in the heat exchanger. 0 on the x axis represents an entrance into the heat exchanger, E is exit from the heat exchanger, from point A the heat exchanger starts running up, from point B temperature of the medium is higher than the surrounding temperature

### Examples of embodiment

### Example 1

A design of a GT heat exchanger for recovering heat having lowered circulation hydraulic requirements and a high output temperature of a heat transfer medium from the heat exchanger.

Embodiment of the heat exchanger having individual and tight pipelines in prevailingly vertical, vertical-declination direction is a main feature of obtaining heat.

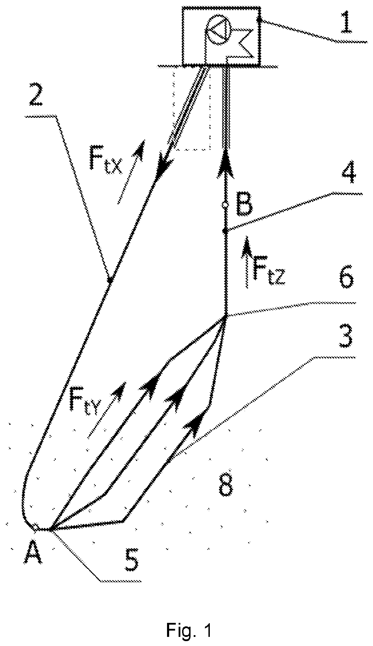

The geothermal heat exchanger according to the present invention, as illustrated in Fig. 1 comprises a descending inlet section 2 that consists of a 5 ½" pipeline having primary a transportation function. Said inlet section 2 provides for bringing a heat transfer medium of a desired temperature into the place at a depth with a highest available temperature of dry rocks (HDR).

The inlet section 2 of the pipeline declines from a vertical position at a small angle of 5°. Consequently, 1 km of the pipeline changes at a minimal bending radius from the vertical direction into a horizontal and slightly rising direction of the heat exchanging production section in the heat exchanging production section 6. A minimal bending radius is around 50 m and is due to drilling technology limitations. Consequently, the pipeline splits into individual pipelines branches having a flow velocity of the heat transfer medium from 0.15 to 0.18 m/s. Point A is a place, where the heat exchanging production pipeline starts ascending gradiently at the angle of 10°. From this point, there is a positive exhibition of thermal buoyancy and a positive force effect in the flow of the heat transfer medium. The effect is multiplied with increase of temperature and decrease in density in the pipelines of the heat exchanging production section 3 by heat transfer from dry rocks. That is multiplied by division of the heat transfer medium through the splitter 5 into three pipelines - branches of the heat exchanging production section 3. With a working life of 25 years and the distance between individual branches in the central parts of the pipelines of 650 m, there is a minimal mutual influence of heat flows in dry rocks 8.

Consecutive branched parts of the pipelines in the heat exchanging production section 3 are connected into one pipeline - the collector 6 admitted into the outlet section 4 of the geothermal heat exchanger in a layer - 1500 m, which diameter is twice smaller than the diameter of an inlet section 2 of the geothermal heat exchanger. The velocity in the outlet section 4 is up to six times greater than the one in the inlet section 2 and reaches, but does not exceed 2 m/s. An upper part of the outlet section 4 is reinforced in the loose part near the surface by a casing. The borehole in this part is more than 2.5 times the diameter of the heat production section, while the inserted casing is preferably sealed with a "grout" having thermal insulation properties (thermal conductivity less than 1 W/mK).

Similarly to the inlet section 2, the geothermal heat exchanger is equipped with a pressure closure at the surface in the outlet section 4 and followingly, it follows into the exchanging and circulation pumping station 1, which provides for recirculation of the heat transfer medium.

### Example 2

A geothermal heat exchanger with a minimum number of inlet and outlet pipelines. Having a great number of pipelines in a heat exchanging production section. The described geometry represents an example of the geothermal heat exchanger designed for maximum temperature.

The exchanger is shown in Fig. 4b.

Minimal diameters of the pipelines are preferred in consideration of minimisation of drilling costs that are proportional to the deteriorated and drilled rock.

The heat exchanger having a minimum cross-section and a low flow of media in a heat exchanging production section enables reaching a maximisation of a pipeline specific heat output collected from a surrounding rock relative to the amount of rock drilled from the rock mass.

The pipeline of the inlet section 2 of the geothermal heat exchanger shown in Fig. 4b has a diameter of 6 ⅝", it descents to the depth of 6000 m vertically under the angle of 16°. In the loose subsurface part, the pipeline is reinforced by casing. A wall surface in the reinforced part is plasma-treated by melting and/or by application of a melted accessory material the wall surface is treated to a tight and smooth state. The flow velocity of the heat transfer medium is 1.2 m/s. The pipeline passes from a descending prevailingly vertical position into an ascending one under the angle of 19° into a lyre splitter 5 in the bottom part of the inlet section of the pipeline. The splitter 5 is formed by a 6 ⅝" pipeline rising under the angle of 5°. The pipelines of the individual branches of the heat exchanging production section 3 are connected into said pipeline of the splitter 5, spaced at equal intervals. In this case there are six branches - "strings" of a lyre with the pipelines having diameter of 4 ½". The branches of the pipeline of the heat exchanging production section 3 are arranged parallel in a plane ascending inclinedly under the angle of 19°. In the upper part they are guided into the collector 6 of the pipeline in a smooth inclination ascending under the identical angle of 5°. The diameter of said pipeline is 4 ½" and the heat transfer medium flows in it with the velocity of 0.5 m/s. The pipeline changes its direction from prevailingly horizontal direction after the last inlet of the heat exchanging production section 3 and it starts ascending perpendicularly to the surface.

The flow velocity in the vertical outlet section 4 of the geothermal heat exchanger is 2.6 m/s. In the upper part of the outlet section 4, where sedimentary and loose rocks prevail, the pipeline is reinforced with a production duct having a sheeting function and a diameter of 4". The casing is insulated from outside by an insulation material, a rock having a high thermal resistance. The diameter of a borehole in this part is 8 ⅝" and the space between the casing and the wall is filled with an insulating rock material. In this example insertion extends from the depth of 1200 m under the surface to a smaller diameter of 4". The flow velocity of the heat transfer material is 3.3 m/s in this part, be it at maximum flow rate of 27 l/s. Similarly to Example 1, the surface parts comprise technical elements.

### Example 3

The embodiment of the heat exchanger pursues a high heat output, lower outlet temperature and simultaneously a high flow through a thermal output part of the geothermal heat exchanger (other requirements and demands than in Example 2: high thermal output versus high temperature).

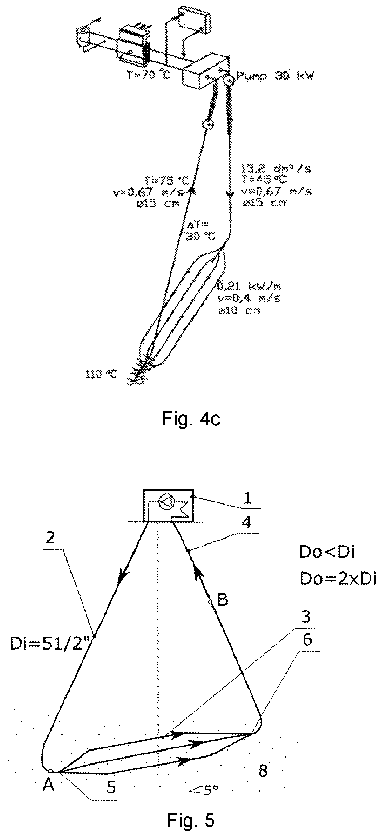

The configuration of the geothermal heat exchanger focused on a high thermal output is shown in Fig. 5 and it consists of the identical configuration of the pipelines as the geothermal heat exchanger described in Example 2, however, it has significantly lower number of branches of the thermal production section 3. An inlet section 2 of the heat exchanger consists of the pipeline of the diameter of 7" having a transportation function; the section decreases slightly slantedly circa 5°. The section provides for a supply of the thermal transfer medium into a required thermal level of the rocks into a place in a depth with the highest available temperature of dry rocks (HDR) and in the required distance of 1300 m from the vertical axis. The flow velocity of a liquid is 1.3 m/s at the flow rate of 33 l/s.

In the place where the lowest point A is reached the pipeline passes into a horizontal and consequently to an ascending direction under the angle of 19° in the direction of an axis of the outlet section 4 of the pipeline, similarly to Example 2, except that only three branches, the diameters of which are 4 ½" and they have identical lengths, of the heat exchanging production section 3 of the pipeline, are divided from the splitter 5 after point A. The flow velocity in the branches of the heat production section 3 is 1.07 m/s, which is approximately 2.5 times greater than in Example 2.

After the last branch of the heat exchanging production section 3 the individual branches open into a collector 6, which has the diameter of 5" and which is as large as the diameter of the outlet section 4 of the pipeline of the geothermal heat exchanger. After connecting the last branch into the collector 6 the pipeline changes the direction from horizontal slightly rising direction and begins ascending perpendicularly at the axis of the outlet section 4 towards the surface.

The flow velocity in the vertical outlet section 4 of the heat exchanger is 2.6 m/s. At the upper part of the outlet section 4 there is a reinforced production tube having a sheeting function, having the diameter of 4 ½" and velocity reaches here the maximum of 3.2 m/s. Other parts of the geometry and parameters are identical to those in Example 2.

The geothermal heat exchanger designed to recover heat having a lower outlet temperature, i.e. aimed at the heat output, enjoys a lower overall summary length of the pipelines by 25%, a greater flow rate by 23% and achieves almost the identical total heat output as the geothermal heat exchanger described in Example 1.

### Example 4

The example compares the geometry of the GT heat exchanger by the authors Moe, Rabben with the geometry design designed according to the principles presented in the present application. The GT design according to the present invention is applied to the geometry of the GT heat exchanger by the authors Moe, Rabben, we point out the differences in the particular steps. The result of which is the GT heat exchanger achieving a higher overall efficiency, output.

The patent document US6247313 by the authors Moe, Rabben (MR) cited in the state of the prior art describes examples of the devices for recovering geothermal energy from dry rock. The devices recover heat by means of geothermal heat exchangers from a geological rock formation characterized by the thermal conductivity of 3 W/m°C for a natural rock and 4 W/m°C for granite.

Fig 4c) shows an exemplary embodiment of the equipment according to US6247313 that has a pipeline in the inlet part having the diameter of 25 cm, branching into the heat production part at a depth of 3370 m to 4379 m. The pipelines descend parallelly in the heat production part, be it in the lowest branch into the depth of 6000 m. Said branches open into the outlet pipeline having the diameter of 40 cm, entering it slantedly downward. The heated fluid is discharged through the outlet tube to the surface to the heat exchanger station.

The configuration of the heat exchanger having prevailingly descending direction of the medium flow at the simultaneous heating generates thermal buoyancy acting against the flow direction of the heat transfer medium. Energy supply by pumps is necessary for overcoming it and for providing for the circulation.

The first step to improve the geothermal heat exchanger according to US6247313 without changing geometry is by turning the flow direction of the heat transfer medium. When turning the flow direction of the medium the better part of the pipeline (of the heat production as well as of the outlet section) will be ascending and thus resulting effect of the thermal buoyancy will be positive in comparison to the negative resultant thermal buoyancy at the flow direction of the medium in the heat exchanger according to US6247313. Reduced overall energy consumption required to provide for circulation of the heat transfer medium is a result of amendments of the flow alteration, since hydraulic losses are covered by thermal buoyancy.

Reducing pressure losses in the expanded outlet part of the pipeline due to increased temperatures, higher pressures and expansion was the original intention of the inventors of US6247313 when dimensioning diameters. That will be demonstrated in an increase of heat losses due to a larger area and a greater time delay of the heat transfer medium, a greater heat transfer in the outlet part of the heat exchanger.

The inlet section of the heat exchanger changes with the outlet one by reversing the flow direction of the heat transfer medium. A smaller diameter of the now outlet section of the pipelines of the MR exchanger has a positive effect on the opposite flow direction: decrease in thermal losses in the outlet section of the pipeline. Increased pressure losses are covered by thermal buoyancy. A higher outlet velocity, a shorter delay time of a fluid and a smaller heat transfer area of the pipeline to the surroundings are achieved with a smaller diameter. US6247313 states that the thermal output of the equipment conveyed to the surface at the level of 1.5 MW of the heat is recovered from the rocks of 1.7 MW, which represents loss of 0.2 MW.

When reversing the flow direction of the heat transfer medium and desired change in flow velocity (subject to substitution of diameters of the inlet and outlet tubes), in compliance with the present invention the output conveyed to the surface of 1.68 MW is achieved and the losses are lowered by 25%, which means a higher output temperature of the geothermal heat exchanger and better utilization of the obtained energy.

In the configuration of US6247313 the specific thermal output of the heat exchanger was established by empirical calculation to 0.21 kW/m of the pipeline. Although the inventors of the heat exchanger according to US6247313 deal with the spatial and longitudinal dimensioning of the geothermal heat exchanger with an emphasis to the calculation of the thermal output and heat recovery relative to the specific heat output of the rocks with regard to the length of the heat exchanger and of the heat production pipeline, they do not address achieving economic efficiency when overcoming hydraulic resistances and circulations in the closed heat exchanger. The overall energy intensity when recovering the geothermal energy is not addressed from the aspect of the energy expended on water circulation or of minimization of heat losses during the transport of the heated fluid into the heat exchanger station.

Further improvements of the heat exchanger can only be achieved by amendment of the geometry. An even flow has a significant influence on the maximum utilization of the heat production sections of the branches of the heat exchanger.

In order to achieve even flow in the branches of the heat production section according to US6247313 in one of the examples the branches of the pipelines of the heat production section of the heat exchanger were positioned into identical equithermal levels. Positioning of the branches into the identical equithermal levels is only a partial solution and does not provide for equal flow through the branches of the heat production section of the heat exchanger.

Amendments in the geometry according to the present invention in comparison to US6247313 resulting in reduction of the energy intensity of the heat exchanger are the changes in the following:
a) The heat production section of the heat exchanger: the configuration of the branches in the heat production section and the change in inclination
b) The diameters of the tubes of the inlet/outlet section of the heat exchanger.

a) The identical flow and steady heat transfer in the pipelines of the branches of the heat production section of the heat exchanger is provided for not only by positioning the pipelines into the equithermal levels, but simultaneously also by their equidistance dimensioning. Thanks to the lyre configuration of the pipelines in the heat exchanging section of the heat exchanger the lengths of the pipelines and the paths of the heat transfer medium are identical from the inlet to the outlet of the heat transfer section of the heat exchanger. In order to provide for the even flow through the branching it is necessary to keep identical proportions, lengths of branches when drilling the pipelines of the splitter 5 of the diameter of 4 ½" and the collector 6 of the diameter of 4 ½".

The heat transfer medium ascends slantedly at an angle of 20°-50° (preferably 45°) in the heat production section of the heat exchanger, where it is branched into four identically long pipelines. The heat production tubes direct slantedly upward to the axis of the outlet pipeline and thus part of the energy necessary for circulation is provided by thermal buoyancy. Their resulting summary effect results in reduced demands on the pump performance.

b) The aim of the present invention was to improve the heat exchange process and increase output, to increase the specific output with respect to the energy expended while reducing losses. It has been achieved by amending the tube diameters of the inlet/outlet sections of the heat exchanger so that the outlet section preferably has a smaller diameter than the inlet one. Coincidentally, the suitable changes in the tube diameters in this particular geometry were achieved, when the inlet part of the heat exchanger according to US6247313 was made an outlet one for different reasons.

Enhancement of the heat exchange process can be further achieved by changing the geometry and dimensions of the pipelines of the heat exchanger as follows: the diameter of the pipeline of the bottom outlet section of the collector 6 and the following outlet section up to point B has the identical diameter as the diameter of the inlet section, which has the inner diameter of 7". From point B the outlet section is reduced to the diameter of 4 ½", which is, unlike in the patent document US6247313 (where the respective diameters of the pipelines are identical), smaller diameter than in the inlet section, which has diameter of 7". That enables reducing the heat exchange area of the pipeline of the heat exchanger in the outlet section of the heat exchanger and shortening the time of conveying the fluid from the heat production section to the surface, into the heat exchanger station. That configuration reduces heat losses and the heat flow from the pipeline to the surrounding rock. Due to the high temperatures of the heat transfer medium in the pipelines of the heat production section, a high temperature difference between the rock and fluid in the end part of the outlet section of the pipeline in particular occur resulting in increases of thermal losses into the rock. Although the losses do not decrease significantly, they facilitate reaching the higher temperature of the outlet fluid at the heat exchanger outlet and at the inlet into the heat exchanger station.

### Example 5

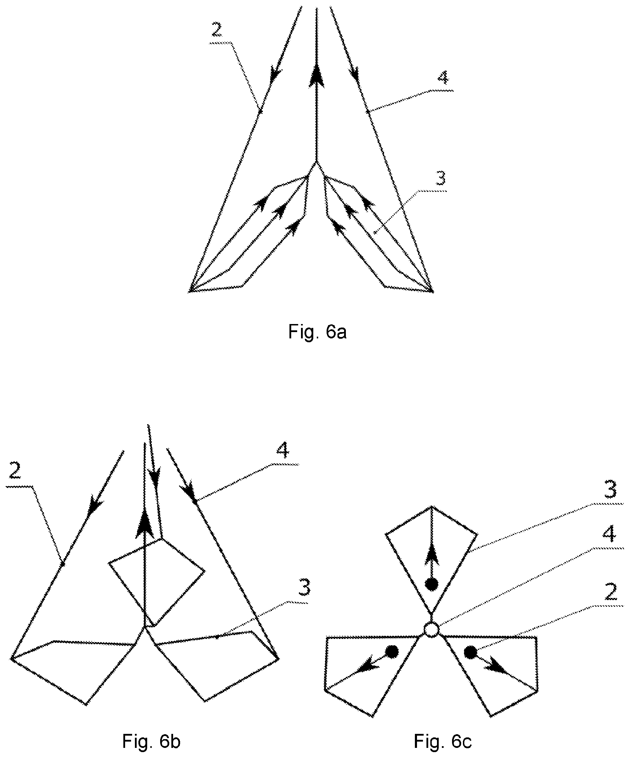

Examples of optimised configurations of the closed geothermal heat exchanger with maximization of the branching with respect to the area-volume recovery are in Fig. 6, where Fig 6a) shows geometry having several inlet sections 2 and one outlet section 4 - a diagrammatic representation of the geometry;

Fig 6b) the three dimensional geometry having the branches in the heat production section 3 positioned into the equithermal levels, Fig. 6c) is a top view of Fig. 6b).

### Example 6

Optimal distances of the branches in a plan view arrangement with regard to a life cycle of the mutual influence of the neighbouring branches.

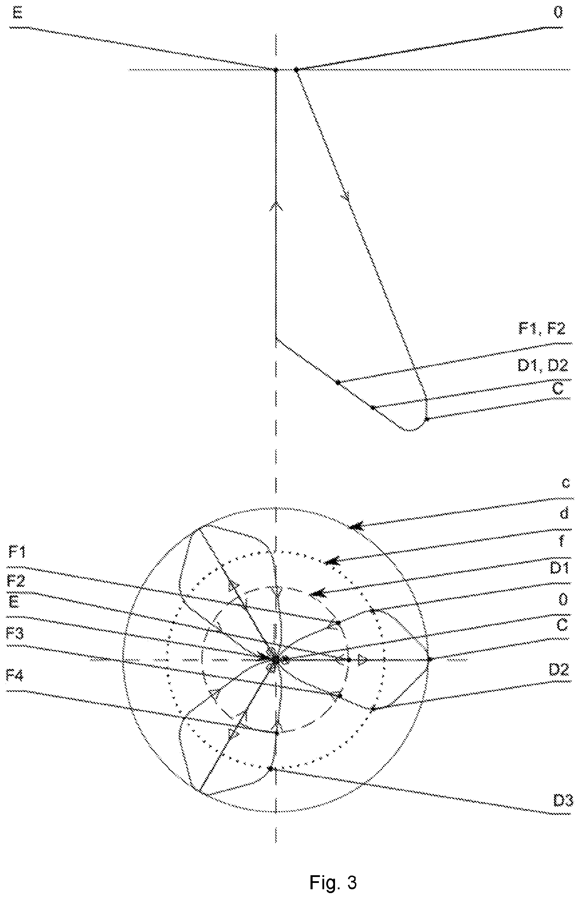

A geothermal heat exchanger shown on (Fig. 3) has three inlets, i.e. three inlet branches (0) and one outlet (E).

In terms of a flow direction of a heat transfer medium each inlet branch divides into three pipelines in accordance with the aforementioned description, whereby An f circular line:
- Represents a central perimeter of the heat exchanger, which means a distance from a centre of the heat exchanger is 635 m (it is not a half of the radius, it is slightly less, since a starting radius of the branching is included)
- The individual pipelines (of one branch) are equally spaced (e.g. a distance between F1 and F2, or between F2 and F3), thus the circumferential distance in the central perimeter is identical, 2x333 m.
- In this perimeter, a distance between each branch (e.g. the distance between points F3 and F4) is determined. For optimal distribution it is 627 m, but considering a service life and thermal conductivity of the rock is preferably slightly greater than 550 m.

A d circular line:
- The greatest distance between the outermost pipelines of individual branches is positioned 943 m from the centre of the heat exchanger (the d circular line).
- The mutual maximum distance of the outermost pipelines of one branch from each other (e.g. between points D1 and D2) is 860 m.
- The distance between the branches in this perimeter (e-g. between points D2, D3) is 1021 m.

The radius of the heat exchanger (the distance between the central axis of the outlet section of the heat exchanger - the centre of the heat exchanger and the most distant point C) in a plan is 1.32 km.

## Claims

1. A geothermal heat exchanger for recovering geothermal energy from dry rocks by means of a heat transfer medium having a closed circuit of the heat transfer medium, comprising a back pressure closure, a heat transfer medium, a pipeline made by a drilling technology in a rock massif, wherein it further comprises a pump for pumping the heat transfer medium into the pipeline, the pipeline of the geothermal heat exchanger consists of at least one descending inlet section (2) of the pipeline for bringing the heat transfer medium into a depth of 2.5 to 20 km, the heat exchange production section (3) of the pipeline is connected to the descending inlet section (2) and the outlet section (4) of the pipeline is connected to the heat exchange production section (3), the geothermal heat exchanger being **characterized in that** the descending inlet section (2) of the pipeline is shorter than a sum of lengths of the ascending pipeline of the heat exchange production section (3) and of the ascending outlet section (4) of the pipeline of the heat exchanger in terms of flow of the heat transfer medium, and wherein the heat exchange production section (3) consist of at least two branches of the pipeline, a splitter (5), positioned after the lowest point of the pipeline of the geothermal heat exchanger, for forming branches of the heat exchange production section (3) and a collector (6) for connecting branches of the pipeline on the transition into the outlet section (4) and wherein the pipeline of the heat exchange production section (3) is formed ascendingly in a direction from a lowest point of the pipeline towards the outlet section (4) of the heat exchanger, where the gradient angle is 1° to 20° from the horizontal direction and wherein the geothermal heat exchanger is either
• for recovering geothermal energy from dry rocks having high temperature above 130 °C at the outlet onto the earth surface, wherein a sum of the cross-sections of the pipeline branches of the heat exchange production section (3) is greater than the cross-section of the pipeline of the outlet section (4), and where the pump provides for flow velocity of the heat transfer medium of the inlet and of the heat exchange production sections lower than 0.8 m/s; or
• for recovering geothermal energy from dry rocks having high heat output and the outlet temperature of 60 to 130°C, wherein the pipeline diameter the outlet section (4) of the heat exchanger is smaller than the pipeline diameter of the inlet section (2) of the heat exchanger and where the pump provides for flow velocity of the heat transfer medium of 2 to 5 m/s in the vertical outlet section of the heat exchanger and wherein the inlet section (2) of the pipeline is descending at an angle of 3 to 8° from the vertical direction.

2. A geothermal heat exchanger for recovering geothermal energy from dry rocks having high temperature above 130 °C at the outlet onto the earth surface according to claim 1 **characterized in that** it is provided with a pump for providing for flow velocity of 0.1 to 0.3 m/s of the heat transfer medium in the heat exchange production section.

3. A geothermal heat exchanger for recovering geothermal energy from dry rocks having high temperature above 130 °C at the outlet onto the earth surface according to claim 1 **characterized in that** the pipeline diameter of the outlet section (4) is smaller than the pipeline diameter of the inlet section (2) of the heat exchanger.

4. A geothermal heat exchanger for recovering geothermal energy from dry rocks having high heat output and the outlet temperature of 60 to 130°C according to claim 1 **characterized in that** the pipeline diameter of the branches of the heat exchange production section (3) is identical with the pipeline diameter of the inlet section (2), wherein the pump provides for flow velocity of the heat transfer medium in the inlet section of at least 1.3 m/s.

5. A geothermal heat exchanger for recovering geothermal energy from dry rocks having high heat output and the outlet temperature of 60 to 130°C according to claim 1 **characterized in that** the heat exchange production branches (3) of the pipeline have diameter of 4" to 9" and an identical length.

6. A geothermal heat exchanger for recovering geothermal energy from dry rocks having high heat output and the outlet temperature of 60 to 130°C according to claim 1 **characterized in that** flow velocity of the heat transfer medium in the heat exchange production section (3) is greater than 0.5 m/s.

7. A geothermal heat exchanger according to claim 1, **characterized in that** the pipeline of the inlet section (2) is formed in the prevailingly slanted vertical direction and is connected to the pipeline of the heat exchange production section (3) by a minimum bending radius allowed by the drilling technology.

8. A geothermal heat exchanger according to claim 1, **characterized in that** the upper part of the pipeline of the inlet section (2) and/or of the outlet section (4) are reinforced by casing in the loose part near the surface.

9. A geothermal heat exchanger according to claim 1, **characterized in that** the pipeline of the heat exchange production section (3) after the lowest point of the heat exchanger ascents gradiently at an angle of 3° to 15° from the horizontal direction.

10. A geothermal heat exchanger according to claim 1, **characterized in that** the heat exchange production section (3) comprises 2 to 6 branches connecting in a collector (6), wherein the mutual distance of the central parts of the pipeline branches of the heat exchange production section (3) is 550 to 750 m.

11. A geothermal heat exchanger according to claim 1, **characterized in that** water is the heat transfer medium.

12. The geothermal heat exchanger according to any of the preceding claims, **characterized in that** it comprises the heat transfer medium and the pipeline made by a drilling technology, where the pipeline comprises three inlet sections (2) directed slantedly downward at an angle of 10° to 25° from the vertical direction and which inlets form the apexes of an equilateral triangle on the surface, and a separate heat exchange production section (3) consisting of two to three branches directing horizontally up to upwards at an angle of 1 to 20° from the horizontal direction to a vertical axis passing through the centre of the equilateral triangle, is connected to each inlet section (2), wherein each heat exchange production section (3) has a separate outlet, which leads into the outlet section (4) of the geothermal heat exchanger extending upwards in the direction of the vertical axis passing through the centre of the equilateral triangle, wherein the inlet and outlet sections are defined in terms of flow of the heat transfer medium.

13. A geothermal heat exchanger according to claim 12, **characterized in that** it comprises three inlet sections (1) and one outlet section (4), wherein according to the flow direction of the heat transfer medium each inlet section (2) after the lowest point of the heat exchanger is individually divided by the splitter (5) into three branches of the heat exchange production section (3), where two outer branches are arranged symmetrically about the inner branch in the plane ascending towards the axis of the outlet section (4) at an angle of 10 to 20° from the horizontal plane and all three branches of the same heat exchange production section are connected by the collector (6), where the central perimeter of the heat exchanger is 635 m and **in that** distance from the axis of the outlet section (4) the individual adjacent pipelines of the identical heat exchange production section in each of the three heat exchange production section (3) are equally spaced by the distance of 333m; and the distance of the outer branches of two adjacent heat exchange production section is 630 m and where at the distance of 940 m from the centre of the geothermal heat exchanger is the mutual maximum distance of the outer branches of the same heat exchange production section (3) is 1000 m and the diameter of the heat exchanger from the axis of the outlet section toward the each splitter in the horizontal plane is 1300 m.

14. A geothermal heat exchanger according to claims 1, 12 or 13,
**characterized in that** all branches of each heat exchange production section (3) have identical hydraulic resistance.

## Patentansprüche

1. Erdwärmetauscher zur Rückgewinnung von Erdwärme aus trockenem Gestein mittels eines Wärmeträgermediums mit einem geschlossenen Kreislauf des Wärmeträgermediums, umfassend einen Stauverschluss, ein Wärmeträgermedium, eine durch Bohrtechnik in einem Felsmassiv hergestellte Rohrleitung, wobei er ferner eine Pumpe zum Pumpen des Wärmeträgermediums in die Rohrleitung umfasst, die Rohrleitung des Erdwärmetauschers aus mindestens einem abfallenden Einlassabschnitt (2) der Rohrleitung besteht, um das Wärmeträgermedium in eine Tiefe von 2,5 bis 20 km zu bringen, der Wärmeaustausch-Erzeugungsabschnitt (3) der Rohrleitung ist mit dem abfallenden Einlassabschnitt (2) verbunden und der Auslassabschnitt (4) der Rohrleitung ist mit dem Wärmeaustausch-Erzeugungsabschnitt (3) verbunden, wobei der Erdwärmetauscher **dadurch gekennzeichnet ist, dass** der abfallende Einlassabschnitt (2) der Rohrleitung kürzer als eine Summe der Längen der aufsteigenden Rohrleitung des Wärmeaustausch-Erzeugungsabschnitts (3) und des aufsteigenden Auslassabschnitts (4) der Rohrleitung des Wärmetauschers hinsichtlich der Strömung des Wärmeträgermediums ist, und wobei der Wärmeaustausch-Erzeugungsabschnitt (3) aus mindestens zwei Zweigen der Rohrleitung besteht, einem Splitter (5), der nach dem tiefsten Punkt der Rohrleitung des Erdwärmetauschers positioniert ist, um Zweige des Wärmeaustausch-Erzeugungsabschnitts (3) zu bilden und einem Sammler (6) zum Verbinden von Zweigen der Rohrleitung am Übergang in den Auslassabschnitt (4), und wobei die Rohrleitung des Wärmeaustausch-Erzeugungsabschnitts (3) in einer Richtung von einem tiefsten Punkt der Rohrleitung zum Auslassabschnitt (4) des Wärmetauschers ansteigend ausgebildet ist, wo der Neigungswinkel 1° bis 20° zur Horizontalen ist und wobei der Erdwärmetauscher entweder
• zur Rückgewinnung von Erdwärme aus trockenem Gestein mit einer hohen Temperatur von über 130 °C am Auslass auf die Erdoberfläche ist, wobei eine Summe der Querschnitte der Rohrleitungszweige des Wärmeaustausch-Erzeugungsabschnitts (3) größer als der Querschnitt der Rohrleitung des Auslassabschnitts (4) ist, und wo die Pumpe für eine Strömungsgeschwindigkeit des Wärmeträgermediums des Einlasses und der Wärmeaustausch-Erzeugungsabschnitte von weniger als 0,8 m/s sorgt; oder
• zur Rückgewinnung von Erdwärme aus trockenem Gestein mit hoher Wärmeleistung und der Auslasstemperatur von 60 bis 130°C ist, wobei der Rohrleitungsdurchmesser des Auslassabschnitts (4) des Wärmetauschers kleiner als der Rohrleitungsdurchmesser des Einlassabschnitts (2) des Wärmetauschers ist, und wo die Pumpe für eine Strömungsgeschwindigkeit des Wärmeträgermediums von 2 bis 5 m/s im vertikalen Auslassabschnitt des Wärmetauschers sorgt und wobei der Einlassabschnitt (2) der Rohrleitung unter einem Winkel von 3 bis 8° von der vertikalen Richtung abfällt.

2. Erdwärmetauscher zur Rückgewinnung von Erdwärme aus trockenem Gestein mit einer hohen Temperatur von über 130°C am Auslass auf die Erdoberfläche nach Anspruch 1, **dadurch gekennzeichnet, dass** er mit einer Pumpe zur Bereitstellung einer Strömungsgeschwindigkeit von 0,1 bis 0,3 m/s des Wärmeträgermediums im Wärmeaustausch-Erzeugungsabschnitt versehen ist.

3. Erdwärmetauscher zur Rückgewinnung von Erdwärme aus trockenem Gestein mit einer hohen Temperatur von über 130°C am Auslass auf die Erdoberfläche nach Anspruch 1, **dadurch gekennzeichnet, dass** der Rohrleitungsdurchmesser des Auslassabschnitts (4) kleiner ist als der Rohrleitungsdurchmesser des Einlassabschnitts (2) des Wärmetauschers.

4. Erdwärmetauscher zur Rückgewinnung von Erdwärme aus trockenem Gestein mit hoher Wärmeleistung und einer Auslasstemperatur von 60 bis 130°C nach Anspruch 1, **dadurch gekennzeichnet, dass** der Rohrleitungsdurchmesser der Zweige des Wärmeaustausch-Erzeugungsabschnitts (3) identisch mit dem Rohrleitungsdurchmesser des Einlassabschnitts (2) ist, wobei die Pumpe für eine Strömungsgeschwindigkeit des Wärmeträgermediums im Einlassabschnitt von mindestens 1,3 m/s sorgt.

5. Erdwärmetauscher zur Rückgewinnung von Erdwärme aus trockenem Gestein mit hoher Wärmeleistung und einer Auslasstemperatur von 60 bis 130°C nach Anspruch 1, **dadurch gekennzeichnet, dass** die Wärmeaustausch-Erzeugungszweige (3) der Rohrleitung einen Durchmesser von 4" bis 9" und eine identische Länge aufweisen.

6. Erdwärmetauscher zur Rückgewinnung von Erdwärme aus trockenem Gestein mit hoher Wärmeleistung und einer Auslasstemperatur von 60 bis 130°C nach Anspruch 1, **dadurch gekennzeichnet, dass** die Strömungsgeschwindigkeit des Wärmeträgermediums im Wärmeaustausch-Erzeugungsabschnitt (3) größer als 0,5 m/s ist.

7. Erdwärmetauscher nach Anspruch 1, **dadurch gekennzeichnet, dass** die Rohrleitung des Einlassabschnitts (2) in überwiegend schräger vertikaler Richtung ausgebildet und mit der Rohrleitung des Wärmeaustausch-Erzeugungsabschnitts (3) mit einem Mindestbiegeradius verbunden ist, der durch die Bohrtechnologie zulässig ist.

8. Erdwärmetauscher nach Anspruch 1, **dadurch gekennzeichnet, dass** der obere Teil der Rohrleitung des Einlassabschnitts (2) und/oder des Auslassabschnitts (4) im oberflächennahen losen Teil durch eine Ummantelung verstärkt ist.

9. Erdwärmetauscher nach Anspruch 1, **dadurch gekennzeichnet, dass** die Rohrleitung des Wärmeaustausch-Erzeugungsabschnitts (3) nach dem tiefsten Punkt des Wärmetauschers in einem Winkel von 3° bis 15° zur Horizontalen geneigt ansteigt.

10. Erdwärmetauscher nach Anspruch 1, **dadurch gekennzeichnet, dass** der Wärmeaustausch-Erzeugungsabschnitt (3) umfasst 2 bis 6 sich in einem Sammler (6) verbindende Zweige, wobei der gegenseitige Abstand der zentralen Teile der Rohrleitungszweige des Wärmeaustausch-Erzeugungsabschnitts (3) 550 bis 750 m beträgt.

11. Erdwärmetauscher nach Anspruch 1, **dadurch gekennzeichnet, dass** Wasser das Wärmeträgermedium ist.

12. Erdwärmetauscher nach einem der vorhergehenden Ansprüche, **dadurch gekennzeichnet, dass** er das Wärmeträgermedium und die durch Bohrtechnik hergestellte Rohrleitung umfasst, wo die Rohrleitung drei Einlassabschnitte (2) umfasst, die schräg nach unten in einem Winkel von 10° bis 25° von der Vertikalen gerichtet sind und deren Einlässe die Spitzen eines gleichseitigen Dreiecks an der Oberfläche bilden, und einen separaten Wärmeaustausch-Erzeugungsabschnitt (3), der aus zwei bis drei Zweigen besteht, die horizontal bis aufwärts in einem Winkel von 1 bis 20° von der horizontalen Richtung zu einer vertikalen Achse gerichtet sind, die durch die Mitte des gleichseitigen Dreiecks verläuft, dass er mit jedem Einlassabschnitt (2) verbunden ist, wobei jeder Wärmeaustausch-Erzeugungsabschnitt (3) einen separaten Auslass aufweist, der in den Auslassabschnitt (4) des Erdwärmetauschers mündet, der sich aufwärts in der Richtung der vertikalen durch die Mitte des gleichseitigen Dreiecks verlaufenden Achse erstreckt, wobei die Einlass- und Auslassabschnitte hinsichtlich der Strömung des Wärmeträgermediums definiert sind.

13. Erdwärmetauscher nach Anspruch 12, **dadurch gekennzeichnet, dass** er drei Einlassabschnitte (1) und einen Auslassabschnitt (4) umfasst, wobei entsprechend der Strömungsrichtung des Wärmeträgermediums jeder Einlassabschnitt (2) nach dem niedrigsten Punkt des Wärmetauschers durch den Splitter (5) in drei Zweige des Wärmeaustausch-Erzeugungsabschnitts (3) einzeln aufgeteilt ist, wo zwei äußere Zweige symmetrisch um den inneren Zweig in der zur Achse des Auslassabschnitts (4) in einem Winkel von 10 bis 20° von der horizontalen Ebene ansteigenden Ebene angeordnet sind und alle drei Zweige des gleichen Wärmeaustausch-Erzeugungsabschnitts durch den Sammler (6) verbunden sind, wo der mittlere Umfang des Wärmetauschers 635 m beträgt und in diesem Abstand von der Achse des Auslassabschnitts (4) die einzelnen benachbarten Rohrleitungen des identischen Wärmeaustausch-Erzeugungsabschnitts in jedem der drei Wärmeaustausch-Erzeugungsabschnitte (3) gleichmäßig mit einem Abstand von 333m voneinander entfernt sind; und der Abstand der äußeren Zweige zweier benachbarter Wärmeaustausch-Erzeugungsabschnitte 630 m beträgt und wo in einem Abstand von 940 m von der Mitte des Erdwärmetauschers der gegenseitige maximale Abstand der äußeren Zweige des gleichen Wärmeaustausch-Erzeugungsabschnitts (3) 1000 m und der Durchmesser des Wärmetauschers von der Achse des Auslassabschnitts zu jedem Splitter in der horizontalen Ebene 1300 m betragen.

14. Erdwärmetauscher nach Anspruch 1, 12 oder 13, **dadurch gekennzeichnet, dass** alle Zweige jedes Wärmeaustausch-Erzeugungsabschnitts (3) gleichen hydraulischen Widerstand aufweisen.

## Revendications

1. Sonde géothermique pour la récupération de l'énergie géothermique des roches sèches à travers un fluide de transfert de la chaleur avec un circuit fermé du fluide de transfert de la chaleur, comprenant une fermeture de contre-pression, un fluide de transfert de la chaleur, une conduite réalisée par technologie de forage dans le massif rocheux, sachant qu'elle inclue également une pompe pour pomper le fluide de transfert de la chaleur dans la conduite ; la conduite de la sonde géothermique se compose d'au moins un tronçon (2) d'entrée descendant de la conduite pour transférer le fluide de transfert de la chaleur à une profondeur de 2,5 - 20 km ; le tronçon de production du transfert de la chaleur (3) de la conduite est relié au tronçon (2) d'entrée descendant et le tronçon(4) de sortie de la conduite est relié au tronçon de production du transfert de la chaleur (3), la sonde géothermique étant **caractérisée en ce que** le tronçon (2) d'entrée descendant de la conduite est plus court que la somme des longueurs de la conduite ascendante du tronçon de production du transfert de la chaleur (3) et du tronçon (4) de sortie ascendante de la conduite de la sonde en termes de débit du fluide de transfert de la chaleur, et sachant que le tronçon de production du transfert de la chaleur (3) se compose d'au moins deux branches de la conduite, un diviseur (5) positionné après le point le plus bas de la conduite de la sonde géothermique, pour former les branches du tronçon de production du transfert de la chaleur (3), et un collecteur (6) pour relier les branches de la conduite dans la transition vers le tronçon (4) de sortie, et sachant que la conduite du tronçon de production du transfert de la chaleur (3) est formée de façon ascendante dans une direction allant du point le plus bas de la conduite vers le tronçon (4) de sortie de la sonde, où l'angle du gradient est 1° - 20° à partir de la direction horizontale, et sachant que la sonde géothermique peur servir
• pour la récupération de l'énergie géothermique des roches sèches à haute température au-dessus de 130 °C à la sortie sur la surface terrestre, sachant que la somme des coupes transversales des branches de la conduite du tronçon de production du transfert de la chaleur (3) est supérieure à la coupe transversale de la conduite du tronçon (4) de sortie, et où la pompe assure une vitesse du débit du fluide de transfert de la chaleur de l'entrée et des tronçons de production du transfert de la chaleur au dessous de 0,8 m/s ; ou
• pour la récupération de l'énergie géothermique des roches sèches avec un rendement calorifique élevé et une température de sortie de 60 à 130 °C, sachant que le diamètre de la conduite du tronçon (4) de sortie de la sonde est inférieur au diamètre de la conduite du tronçon (2) d'entrée de la sonde, et où la pompe assure une vitesse du débit du fluide de transfert de la chaleur égale a 2 - 5 m/s dans le tronçon de sortie vertical de la sonde, sachant que le tronçon (2) d'entrée de la conduite est descendant avec un angle de 3 - 8° à partir de la direction vertical.

2. Sonde géothermique pour la récupération de l'énergie géothermique des roches sèches à haute température au-dessus de 130 °C à la sortie sur la surface terrestre, selon la revendication 1, **caractérisée en ce qu'**elle est pourvue d'une pompe pour assurer une vitesse du débit du fluide de transfert de la chaleur de 0,1 à 0,3 m/s dans le tronçon de production du transfert de la chaleur.

3. Sonde géothermique pour la récupération de l'énergie géothermique des roches sèches à haute température au-dessus de 130 °C à la sortie sur la surface terrestre, selon la revendication 1, **caractérisée en ce que** le diamètre de la conduite du tronçon (4) de sortie est inférieur au diamètre de la conduite du tronçon (2) d'entrée de la sonde.

4. Sonde géothermique pour la récupération de l'énergie géothermique des roches sèches avec un rendement calorifique élevé et une température de sortie de 60 à 130 °C, selon la revendication 1, **caractérisée en ce que** le diamètre de la conduite des branches du tronçon de production du transfert de la chaleur (3) est identique au diamètre de la conduite du tronçon (2) d'entrée, sachant que la pompe assure une vitesse du débit du fluide de transfert de la chaleur dans le tronçon d'entrée d'au moins 1,3 m/s.

5. Sonde géothermique pour la récupération de l'énergie géothermique des roches sèches avec un rendement calorifique élevé et une température de sortie de 60 à 130 °C, selon la revendication 1, **caractérisée en ce que** les branches du tronçon de production du transfert de la chaleur (3) de la conduite ont un diamètre de 4" à 9" et une longueur identique.

6. Sonde géothermique pour la récupération de l'énergie géothermique des roches sèches avec un rendement calorifique élevé et une température de sortie de 60 à 130 °C, selon la revendication 1, **caractérisée en ce que** la vitesse du débit du fluide de transfert de la chaleur dans le tronçon de production du transfert de la chaleur (3) est supérieure à 0,5 m/s.

7. Sonde géothermique selon la revendication 1, **caractérisée en ce que** la conduite du tronçon (2) d'entrée est formée dans une direction verticale couramment inclinée et elle est reliée à la conduite du tronçon de production du transfert de la chaleur (3) par un rayon de courbure minimal qui est assuré grâce à la technologie de forage.

8. Sonde géothermique selon la revendication 1, **caractérisée en ce que** la partie supérieure de la conduite du tronçon (2) d'entrée et/ou du tronçon (4) de sortie est renforcée avec un étui dans la partie libre à côté de la surface.

9. Sonde géothermique selon la revendication 1, **caractérisée en ce que** la conduite du tronçon de production du transfert de la chaleur (3) après le point le plus bas de la sonde remonte graduellement avec un angle de 3° a 15° à partir de la direction horizontale.

10. Sonde géothermique selon la revendication 1, **caractérisée en ce que** le tronçon de production du transfert de la chaleur (3) comprend de 2 à 6 branches reliées dans un collecteur (6), sachant que la distance mutuelle des parties centrales des branches de la conduite du tronçon de production du transfert de la chaleur (3) est de 550 à 750 m.

11. Sonde géothermique selon la revendication 1, **caractérisée en ce que** le fluide de transfert de la chaleur est représenté par l'eau.

12. Sonde géothermique selon n'importe quelle revendication ci-dessus **caractérisée en ce qu'**elle inclue un fluide de transfert de la chaleur et une conduite réalisée avec technologie de forage, où la conduite comprend trois tronçons (2) d'entrée inclinés vers le bas avec un angle de 10° à 25° à partir de la direction verticale et les entrées constituent les pointes d'un triangle équilatéral sur la surface ; et un tronçon de production du transfert de la chaleur (3) séparé, composé par deux ou trois branches en direction horizontale montant vers le haut avec un angle de 1° à 20° à partir de la direction horizontale vers un axe vertical passant à travers le centre du triangle équilatéral, est relié à chaque tronçon (2) d'entrée, sachant que chaque tronçon de production du transfert de la chaleur (3) a une sortie séparée, qui conduit au tronçon (4) de sortie de la sonde géothermique, en s'étendant vers le haut en direction de l'axe vertical en passant par le centre du triangle équilatéral, sachant que les tronçons d'entrée et de sortie sont définis en termes de débit du fluide de transfert de la chaleur.

13. Sonde géothermique selon la revendication 12 **caractérisée en ce qu'**elle inclue trois tronçons (1) d'entrée et un tronçon (4) de sortie, sachant que - selon la direction du débit du fluide de transfert de la chaleur - chaque tronçon (2) d'entrée après le point le plus bas de la sonde est individuellement divisé par un diviseur (5) dans les trois branches du tronçon de production du transfert de la chaleur (3), où les deux branches externes sont organisées symétriquement par rapport à la branche interne qui remonte vers l'axe du tronçon (4) de sortie avec un angle de 1° à 20° à partir du plan horizontal, et toutes les trois branches du même tronçon de production du transfert de la chaleur sont reliées par un collecteur (6), où le périmètre central de la sonde est 635 m et - à ladite distance de l'axe du tronçon (4) de sortie - les conduites individuelles adjacentes du même tronçon de production du transfert de la chaleur dans chacun des trois tronçons de production du transfert de la chaleur (3) sont espacés de façon égale avec une distance de 333 m ; et la distance des branches externes des deux tronçons de production du transfert de la chaleur adjacents est 630 et où - à une distance de 940 m du centre de la sonde géothermique - la distance maximale mutuelle entre les branches externes du même tronçon de production du transfert de la chaleur (3) est 1000 m, et le diamètre de la sonde à partir de l'axe du tronçon externe vers chaque diviseur dans le plan horizontal est 1300 m.

14. Sonde géothermique selon les revendications 1, 12 ou 13, **caractérisée en ce que** toutes les branches de chaque tronçon de production du transfert de la chaleur (3) ont la même résistance hydraulique.
